# FASCICULE DE BREVET EUROPEEN

(11) **EP 1 193 030 B1**
(45) Date de publication et mention de la délivrance du brevet: **25.05.2005**
(21) Numéro de dépôt: 01810932.2
(22) Date de dépôt: 25.09.2001
(51) Int. Cl.: B24B 27/033, B23Q 1/48, B24B 9/00, B24B 29/02, B23Q 1/54

(54) **Centre de finissage de pièces mécaniques**
Endbearbeitungsmaschine für mechanische Werkstücke
Machine for finishing mechanical pieces

(30) Priorité: 28.09.2000 FR 0012331
(43) Date de publication de la demande: 03.04.2002
(73) Titulaire: Bula, Bernard, CH-1521 Curtilles (CH)
(72) Inventeur: Bula, Bernard, CH-1521 Curtilles (CH)
(74) Mandataire: Nithardt, Roland

(56) Documents cités:
- WO-A-87/01333
- WO-A-89/07500
- WO-A-90/08623
- WO-A-97/00757
- WO-A-98/57777
- DE-A- 3 934 914
- FR-A- 2 629 747
- FR-A- 2 717 726
- PATENT ABSTRACTS OF JAPAN vol. 011, no. 377 (M-649), 9 décembre 1987 (1987-12-09) & JP 62 148129 A (SANKYO SEIKI MFG CO LTD;OTHERS: 01), 2 juillet 1987 (1987-07-02)

## Description

La présente invention conceme un centre de finissage de pièces mécaniques moulées, matricées ou usinées, comportant une enceinte, au moins une unité de finissage comprenant des moyens de finissage rotatifs tels que par exemple des moyens d'ébavurage, de brossage, de ponçage, de meulage ou de polissage, au moins une unité de prise en charge de pièces à traiter, et des moyens d'entraînement pour déplacer lesdits moyens de finissage de manière à mettre les surfaces desdites pièces à traiter pendant un temps prédéterminé sélectivement en contact avec lesdits moyens de finissage, ladite unité de finissage étant suspendue au haut de ladite enceinte et les moyens d'entraînement étant agencés pour déplacer les moyens de finissage selon trois axes orthogonaux (x, y, z) de déplacement linéaire et un axe de rotation (A) parallèle à l'un desdits axes orthogonaux (x) de déplacement linéaire.

On connaît déjà des machines d'usinage et de finissage de pièces mécaniques de ce type, notamment celles qui ont fait l'objet de la demande internationale de brevet publiée sous le numéro PCT/CH86/00126 et celles qui ont été divulguées par le brevet français No. 2 629 747 et par les demandes internationales de brevet publiées sous les numéros WO 90/08623, WO 97/00757 et WO 89/07500.

Ces machines très performantes comportent au moins un robot manipulateur agencé pour mettre en contact les pièces à traiter avec une ou à plusieurs unités de finissage, ces unités étant soit fixes soit mobiles et les moyens de finissage étant en outre montés en rotation sur leur axe.

Certaines complications peuvent survenir du fait de la complexité de la géométrie des pièces à traiter et des difficultés que l'on peut rencontrer pour maintenir ces pièces et pour les déplacer et les mettre en mouvement afin de présenter toutes leurs surfaces aux moyens de finissage. En particulier, avec certaines des machines connues, les pièces sont tenues par un robot "six axes", c'est-à-dire ayant six degrés de liberté. Lors de la programmation des mouvements des pièces et des moyens de finissage, il est nécessaire de gérer simultanément les six degrés de liberté. Ceci est particulièrement complexe et présente une grande difficulté pour les personnes peu habituées à ce type de programmation.

La machine décrite dans le brevet FR 2 629 747 comporte une unité de finissage ayant cinq degrés de liberté. La pièce à traiter est montée sur un support ayant un seul degré de liberté. Cette machine fonctionne parfaitement pour un certain type de pièces. Toutefois, le fait de devoir gérer le déplacement de cinq degrés de liberté ne simplifie pas la programmation de la machine. De plus, par la configuration de la machine, certains mouvements de l'unité de finissage ne sont pas possibles. Il en résulte que, selon le type et la forme des pièces à traiter, ces pièces devront être traitées par deux unités de finissage différentes. Ceci allonge le cycle de travail et diminue donc le nombre de pièces pouvant être traitées dans un laps de temps donné.

Un autre inconvénient des machines de finissage conventionnelles vient du fait que les moyens de finissage sont généralement fixés sur le fond d'un bâti. Les déchets provenant du traitement des pièces tombent à proximité de ces moyens de finissage. Ceci peut encrasser certaines parties de la machine et en diminuer sa durée de vie. D'autre part, l'entretien et le nettoyage du centre de finissage peut être long ce qui immobilise la machine de façon inutilement longue.

La présente invention se propose de pallier les inconvénients des machines de l'art antérieur et de réaliser un centre de finissage autonome et modulaire susceptible de répondre à toutes les demandes et de résoudre la totalité des problèmes qui se posent en matière de finissage automatique de pièces mécaniques, quelle que soit la géométrie de ces pièces et quel que soit le traitement que l'on souhaite leur faire subir.

Ce but est atteint par le centre de finissage selon invention tel que défini en préambule, caractérisé en ce que l'unité de prise en charge des pièces comporte un élément porteur pourvu d'au moins d'un support pivotant autour d'un axe de pivotement B parallèle à l'un desdits axes orthogonaux z de déplacement linéaire.

Selon un mode de réalisation avantageux, le centre de finissage comporte un mandrin porte pièces monté sur ledit support, ce mandrin porte pièces étant rotatif autour d'un axe de rotation C perpendiculaire audit axe de pivotement B du support.

L'axe de pivotement dudit support desdits moyens de finissage est de préférence sensiblement vertical et l'axe de pivotement dudit support est de préférence sensiblement horizontal.

L'élément porteur comporte avantageusement un plateau sensiblement horizontal portant ledit support pivotant, ce plateau étant pivotant autour d'un axe sensiblement vertical et sa position pouvant être indexée.

Ce plateau porte de préférence plusieurs supports pivotant pour la prise en charge de pièces à traiter.

Selon un mode de réalisation particulier de l'invention, ledit plateau porte deux supports pivotant disposés à 180° l'un de l'autre, l'un des support étant en position de traitement à proximité des moyens de finissage pendant que l'autre est en position de chargement et de déchargement, et le plateau étant agencé pour faire passer les deux supports de l'une des positions dans l'autre par une rotation de 180°.

Le centre de finissage selon la présente invention comporte avantageusement une unité de commande des déplacements de l'unité de finissage et/ou de l'unité de prise en charge des pièces à traiter. Cette unité de commande comporte de préférence un interface homme-machine agencé pour permettre la programmation des déplacements de l'unité de finissage et/ou de l'unité de prise en charge des pièces à traiter, ainsi qu'une unité de programmation agencée pour mémoriser les déplacements de l'unité de finissage et/ou de l'unité de prise en charge des pièces à traiter.

Le centre de finissage peut également comporter des moyens d'aspiration formés d'un dispositif d'aspiration et d'un tuyau d'aspiration dont une extrémité débouche dans le bas de l'enceinte.

La présente invention et ses avantages ressortiront mieux dans la description suivante de différents modes de réalisation de l'invention, en référence au dessin annexé, dans lequel :

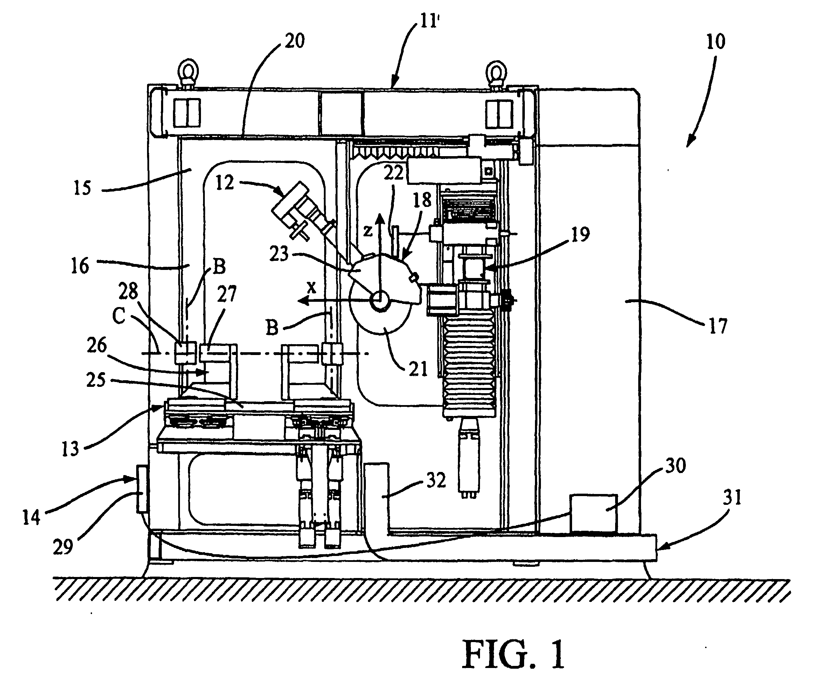

- la figure 1 est une vue de profil du centre de finissage selon l'invention;

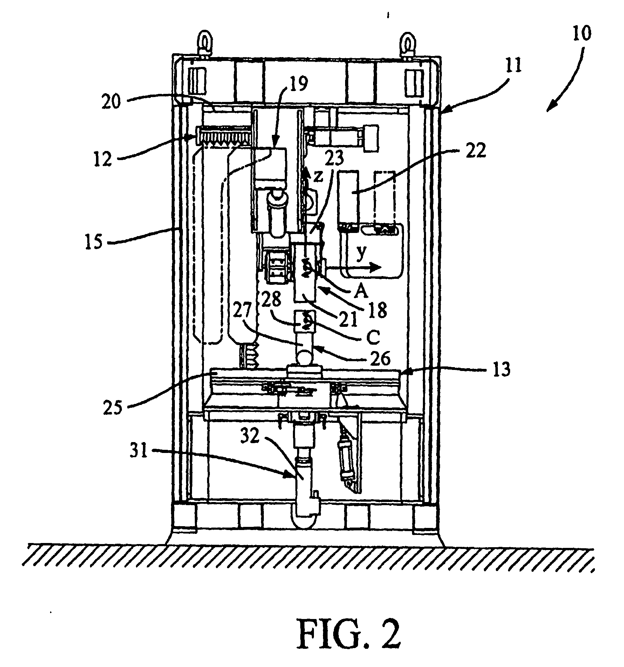

- la figure 2 est une vue de face de la machine de la figure 1;

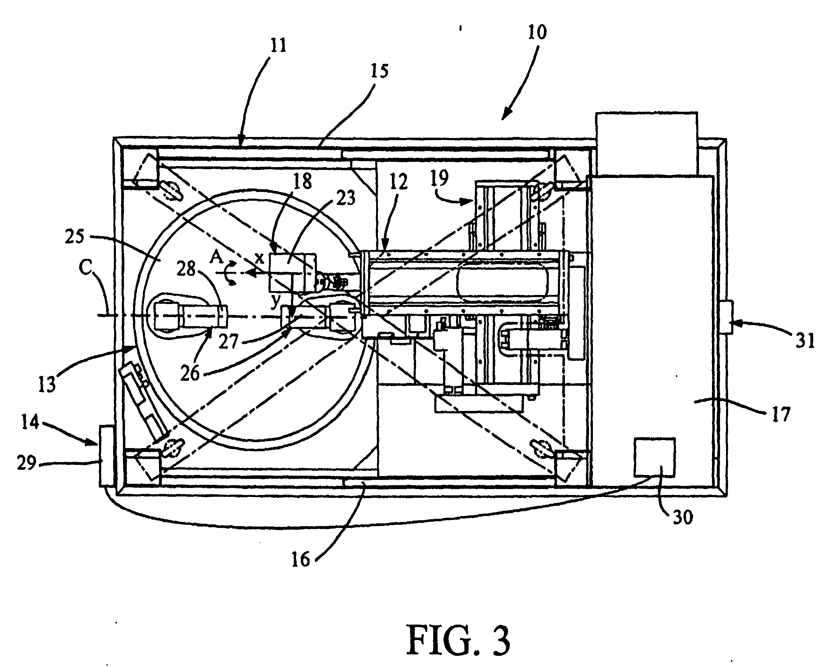

- la figure 3 est une vue de dessus de la machine de la figure 1; et
- la figure 4 est une vue en perspective d'une partie d'une machine selon l'invention.

En référence à ces figures, le centre de finissage 10 selon la présente invention est adapté pour traiter des pièces mécaniques moulées, matricées ou usinées. Ce centre de finissage comporte essentiellement une enceinte 11, une unité de finissage 12, une unité 13 de prise en charge des pièces à traiter et une unité de commande 14.

L'enceinte 11 comporte un bâti 15 muni d'un sas d'accès (non représenté) permettant la mise en place et le retrait de pièces à traiter, tout en garantissant une sécurité optimale de l'utilisateur. Ce bâti comporte également une porte 16 permettant l'accès à l'intérieur de l'enceinte, de même qu'un compartiment électrique 17 permettant de placer toutes les commandes électriques de la machine.

L'unité de finissage 12 comporte essentiellement des moyens de finissage 18 et des moyens d'entraînement 19 de ces moyens de finissage. Cette unité de finissage 12 est fixée au plafond 20 de l'enceinte. Cette réalisation est particulièrement avantageuse parce qu'elle permet de libérer totalement la partie inférieure du bâti 15. Lors de l'utilisation de ce centre de finissage, de nombreuses particules provenant soit des pièces traitées, soit des matériaux utilisés pour le traitement tombent au fond du bâti. Dans les machines conventionnelles, dans lesquelles les unités de finissage sont fixées au plancher du bâti, les particules salissent ces unités de finissage et rendent l'entretien du centre relativement compliqué. En fixant ces unités au plafond de l'enceinte, l'entretien du centre de finissage se trouve grandement facilité.

Les moyens de finissage 18 peuvent être adaptés en fonction du traitement à effectuer. Ils peuvent être composés de moyens d'ébavurage, de brossage, de ponçage, de meulage ou de polissage notamment. Généralement, ces moyens comportent un élément cylindrique 21 tel qu'une meule ou une brosse, ayant une surface qui peut être mise en contact avec les pièces à traiter.

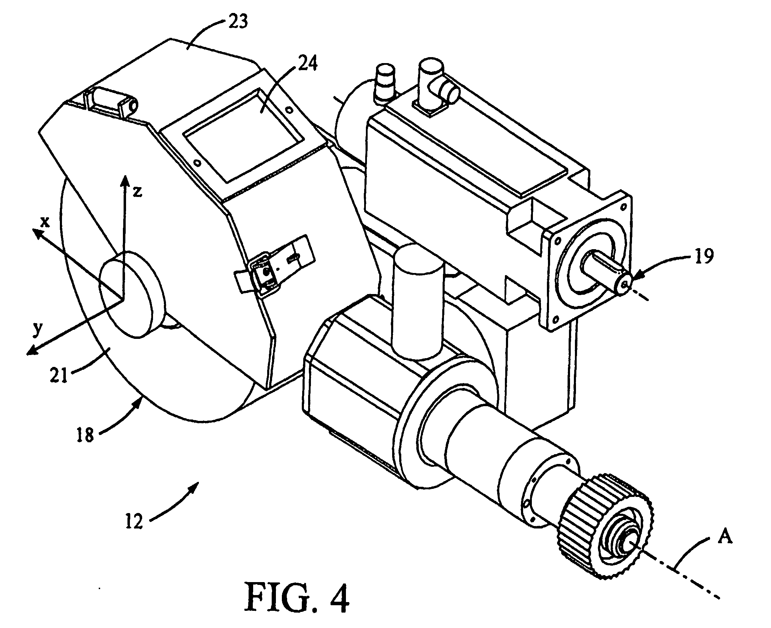

L'unité de finissage 12 peut également comporter des moyens d'alimentation 22 en produits de traitement, tels qu'une pâte abrasive ou un fluide de refroidissement. Dans le mode de réalisation illustré par la figure 4, l'élément cylindrique 21 est entouré d'un carter 23 muni d'un guichet 24 par lequel il est possible d'introduire le produit de traitement.

Les moyens de finissage 18 peuvent être déplacés par l'intermédiaire des moyens d'entraînement 19 selon quatre axes de déplacement. Deux de ces axes x, y sont horizontaux et orthogonaux l'un à l'autre. Un troisième axe z est vertical et orthogonal aux deux précédents. Le quatrième axe A est un axe de rotation permettant aux moyens de finissage de pivoter autour d'un axe colinéaire à l'axe horizontal x. Cet axe de rotation est perpendiculaire à l'axe de rotation de l'élément cylindrique.

L'unité 13 de prise en charge des pièces comporte un plateau tournant 25 sur lequel sont montés deux éléments porteurs 26 formés chacun d'un support pivotant 27 et une broche 28 de prise en charge des pièces à traiter. Le support pivotant 27 est monté sur le plateau 25 de façon à pouvoir pivoter autour d'un axe vertical B. La broche 28 peut pivoter autour d'un axe horizontal C et comporte un mandrin (non représenté) adapté aux pièces à traiter.

Comme mentionné précédemment, le centre d'usinage 10 comporte une unité de commande 14 formée d'un interface 29 de type interface homme-machine et d'une unité de programmation 30. L'interface homme-machine 29 permet à un utilisateur de définir les lois du mouvement de la pièce à traiter et des moyens de finissage 18 de façon à permettre un traitement optimal des pièces. La définition de ces lois de mouvement peut se faire de façon intuitive grâce au fait que les déplacements des éléments porteurs 26 et des moyens de finissage 18 sont distincts et peuvent être décomposés selon des axes simple à visualiser.

L'unité de programmation 30 intègre les lois de mouvement introduites par l'utilisateur de façon à permettre leur reproduction lorsqu'une série de pièces identiques doit être traitée. Cette unité de programmation permet également de tenir compte du temps de chargement et de déchargement des pièces qui se fait sur un mandrin inutilisé, pendant qu'une pièce est traitée sur l'autre mandrin. L'unité de programmation 30 gère également la distribution de produits de traitement.

Le centre de finissage 10 comporte des moyens d'aspiration 31 permettant d'éliminer des particules provenant des pièces traitées et des produits de traitement. Ces moyens d'aspiration comportent un tuyau d'aspiration 32 ayant une extrémité débouchant dans l'enceinte 11, de préférence dans le plancher de celle-ci, et une autre extrémité liée à un aspirateur d'un type connu de l'homme du métier et adapté à l'application du centre de finissage.

Le centre de finissage selon la présente invention présente différents avantages par rapport aux machines de l'art antérieur. Comme l'unité de finissage 12 est suspendue au haut du bâti 15, les déchets qui tombent vers le bas n'encrassent pas les pièces de la machine et en particulier les pièces mobiles. La fiabilité de la machine est donc augmentée. L'accès à ces pièces ainsi qu'à l'intérieur du centre de finissage se trouve facilité, ce qui facilite également son entretien.

Le fait de séparer les six degrés de liberté en quatre degrés de liberté pour l'unité de finissage 12 et deux degrés de liberté pour l'élément porteur 26 permet de définir les lois de mouvement de façon très intuitive par l'intermédiaire de l'interface homme-machine 29, tout en permettant de traiter pratiquement n'importe quel type de pièces, même celles ayant des formes très complexes.

Le fait de libérer le bas du bâti 15 permet d'y installer les moyens d'aspiration 31, ce qui permet une récupération optimale des déchets.

Finalement, la machine peut être facilement adaptée aux besoins spécifiques des utilisateurs, par exemple en modifiant le nombre d'éléments porteurs ou le nombre et la disposition des unités de finissage.

La présente invention n'est pas limitée aux modes de réalisation décrits, mais s'étend à toute modification ou variante évidente pour l'homme du métier, dans les limites des revendications.

## Revendications

1. Centre de finissage de pièces mécaniques moulées, matricées ou usinées, comportant une enceinte (11), au moins une unité de finissage (12) comprenant des moyens de finissage rotatifs (18) tels que par exemple des moyens d'ébavurage, de brossage, de ponçage, de meulage ou de polissage, au moins une unité (13) de prise en charge de pièces à traiter, et des moyens d'entraînement pour déplacer lesdits moyens de finissage de manière à mettre les surfaces desdites pièces à traiter pendant un temps prédéterminé sélectivement en contact avec lesdits moyens de finissage, ladite unité de finissage (12) étant suspendue au haut de ladite enceinte (11) et les moyens d'entraînement (19) étant agencés pour déplacer les moyens de finissage (18) selon trois axes orthogonaux (x, y, z) de déplacement linéaire et un axe de rotation (A) parallèle à l'un desdits axes orthogonaux (x) de déplacement linéaire, **caractérisé en ce que** l'unité (13) de prise en charge des pièces comporte un élément porteur (26) pourvu d'au moins d'un support (27) pivotant autour d'un axe de pivotement (B) parallèle à l'un desdits axes orthogonaux (z) de déplacement linéaire.

2. Centre de finissage selon la revendication 1, **caractérisé en ce qu'**il comporte un mandrin porte pièces monté sur ledit support (27), ce mandrin porte pièces étant rotatif autour d'un axe de rotation (C) perpendiculaire audit axe de pivotement (B) du support.

3. Centre de finissage selon la revendication 1, **caractérisé en ce que** ledit axe de pivotement (B) dudit support (27) desdits moyens de finissage (18) est sensiblement vertical.

4. Centre de finissage selon la revendication 2, **caractérisé en ce que** ledit axe de pivotement (C) dudit support (27) est sensiblement horizontal.

5. Centre de finissage selon la revendication 1, **caractérisé en ce que** l'élément porteur (26) comporte un plateau (25) sensiblement horizontal portant ledit support pivotant (27), ce plateau étant pivotant autour d'un axe sensiblement vertical et sa position pouvant être indexée.

6. Centre de finissage selon la revendication 5, **caractérisé en ce que** ledit plateau (25) porte plusieurs supports pivotant (27) pour la prise en charge de pièces à traiter.

7. Centre de finissage selon la revendication 6, **caractérisé en ce que** ledit plateau (25) porte deux supports pivotant (27) disposés à 180° l'un de l'autre, l'un des support étant en position de traitement à proximité des moyens de finissage (18) pendant que l'autre est en position de chargement et de déchargement, et le plateau étant agencé pour faire passer les deux supports de l'une des positions dans l'autre par une rotation de 180°.

8. Centre de finissage selon la revendication 1, **caractérisé en ce qu'**il comporte une unité de commande (14) des déplacements de l'unité de finissage (12) et/ou de l'unité (13) de prise en charge des pièces à traiter.

9. Centre de finissage selon la revendication 8, **caractérisé en ce que** l'unité de commande (14) comporte un interface homme-machine (29) agencé pour permettre la programmation des déplacements de l'unité de finissage (12) et/ou de l'unité (13) de prise en charge des pièces à traiter.

10. Centre de finissage selon la revendication 8, **caractérisé en ce que** l'unité de commande (14) comporte une unité de programmation (30) agencée pour mémoriser les déplacements de l'unité de finissage (12) et/ou de l'unité (13) de prise en charge des pièces à traiter.

11. Centre de finissage selon la revendication 1, **caractérisé en ce qu'**il comporte des moyens d'aspiration (31) formés d'un dispositif d'aspiration et d'un tuyau d'aspiration (32) dont une extrémité débouche dans le bas de l'enceinte (11).

## Patentansprüche

1. Maschine für die Endbearbeitung von geformten, gesenkgeschmiedeten oder bearbeiteten mechanischen Werkstücken, umfassend einen Raum (11), wenigstens eine Endbearbeitungseinheit (12) mit drehbaren Endbearbeitungsmitteln (18), wie zum Beispiel Mitteln zum Entgraten, Bürsten, Schmirgeln, Schleifen oder Polieren, wenigstens eine Einheit (13) zum Übernehmen von zu bearbeitenden Werkstücken sowie Antriebsmittel, um die genannten Endbearbeitungsmittel derart zu bewegen, dass die Oberflächen der zu bearbeitenden Werkstücke während eines vorbestimmten Zeitraums selektiv mit den Endbearbeitungsmitteln in Kontakt gebracht werden, wobei die Endbearbeitungseinheit (12) oben in dem Raum (11) aufgehängt ist und wobei die Antriebsmittel (19) angeordnet sind, um die Endbearbeitungsmittel (18) entlang dreier orthogonaler Achsen (x, y, z) für lineares Bewegen und entlang einer Rotationsachse (A), welche zu einer der genannten orthogonalen Achsen (x) für lineares Bewegen parallel verläuft, zu bewegen, **dadurch gekennzeichnet, dass** die Einheit (13) zum Übernehmen der Werkstücke ein Tragelement (26) umfasst, das mit wenigstens einem Halter (27) versehen ist, welcher um eine Schwenkachse (B) schwenkbar ist, die zu einer der orthogonalen Achsen (z) für lineares Bewegen parallel verläuft.

2. Endbearbeitungsmaschine nach Anspruch 1, **dadurch gekennzeichnet, dass** sie einen Aufspanndorn aufweist, der an dem genannten Halter (27) angebracht ist, wobei dieser Aufspanndorn um eine Rotationsachse (C), welche zu der Schwenkachse (B) des Halters senkrecht verläuft, drehbar ist.

3. Endbearbeitungsmaschine nach Anspruch 1, **dadurch gekennzeichnet, dass** die Schwenkachse (B) des Halters (27) der Endbearbeitungsmittel (18) im Wesentlichen vertikal verläuft.

4. Endbearbeitungsmaschine nach Anspruch 2, **dadurch gekennzeichnet, dass** die Schwenkachse (C) des Halters (27) im Wesentlichen horizontal verläuft.

5. Endbearbeitungsmaschine nach Anspruch 1, **dadurch gekennzeichnet, dass** das Tragelement (26) eine im Wesentlichen horizontale Platte (25) aufweist, welche den schwenkbaren Halter (27) trägt, wobei diese Platte um eine im Wesentlichen vertikale Achse schwenkbar ist und ihre Position weitergeschaltet werden kann.

6. Endbearbeitungsmaschine nach Anspruch 5, **dadurch gekennzeichnet, dass** die genannte Platte (25) mehrere schwenkbare Halter (27) zum Übernehmen von zu bearbeitenden Werkstücken trägt.

7. Endbearbeitungsmaschine nach Anspruch 6, **dadurch gekennzeichnet, dass** die Platte (25) zwei schwenkbare Halter (27) trägt, die um 180° voneinander angeordnet sind, wobei sich einer der Halter in der Bearbeitungsposition in der Nähe der Endbearbeitungsmittel (18) befindet, während sich der andere in der Belade- und Entladeposition befindet, und wobei die Platte angeordnet ist, um die zwei Halter durch eine Drehung um 180° von einer der Positionen in die andere zu bringen.

8. Endbearbeitungsmaschine nach Anspruch 1, **dadurch gekennzeichnet, dass** sie eine Einheit (14) zum Steuern der Bewegungen der Endbearbeitungseinheit (12) und/oder der Einheit (13) zum Übernehmen der zu bearbeitenden Werkstücke umfasst.

9. Endbearbeitungsmaschine nach Anspruch 8, **dadurch gekennzeichnet, dass** die Steuerungseinheit (14) eine Mensch-Maschine-Schnittstelle (29) umfasst, die eingerichtet ist, um die Programmierung der Bewegungen der Endbearbeitungseinheit (12) und/oder der Einheit (13) zum Übernehmen der zu bearbeitenden Werkstücke zu ermöglichen.

10. Endbearbeitungsmaschine nach Anspruch 8, **dadurch gekennzeichnet, dass** die Steuerungseinheit (14) eine Programmierungseinheit (30) umfasst, welche eingerichtet ist, um die Bewegungen der Endbearbeitungseinheit (12) und/oder der Einheit (13) zum Übernehmen der zu bearbeitenden Werkstücke zu speichern.

11. Endbearbeitungsmaschine nach Anspruch 1, **dadurch gekennzeichnet, dass** sie Absaugmittel (31) umfasst, die von einer Saugvorrichtung und von einem Saugrohr (32) gebildet sind, dessen eines Ende in den unteren Teil des Raumes (11) mündet.

## Claims

1. Finishing machine for moulded, die-cast, or machined mechanical parts, comprising a frame (11), at least one finishing unit (12) comprising rotating finishing means (18) such as, for example, means for deburring, brushing, sanding, grinding or polishing, at least one unit (13) for receiving the parts to be treated, and drive means for displacing said finishing means in order selectively to place the surfaces of said parts to be treated in contact with said finishing means for a predetermined length of time, said finishing unit (12) being suspended at the top of said frame (11) and the drive means (19) being arranged for displacing the finishing means (18) along three orthogonal linear displacement axes (x, y, z) and an axis of rotation (A) parallel to one of said orthogonal linear displacement axes (x), **characterized in that** the unit (13) for receiving the parts comprises a support element (26) provided with at least one support (27) that pivots on a pivot axle (B) parallel to one of said orthogonal linear displacement axes (z).

2. Finishing machine according to claim 1, **characterized in that** it comprises a work holder chuck fitted on said support (27), this work holder chuck being rotating about an axis of rotation (C) that is perpendicular to said pivot axle (B) of the support.

3. Finishing machine according to claim 1, **characterized in that** said pivot axle (B) of said support (27) for said finishing means (18) is substantially vertical.

4. Finishing machine according to claim 2, **characterized in that** said pivot axle (C) for said support (27) is substantially horizontal.

5. Finishing machine according to claim 1, **characterized in that** the support element (26) comprises a substantially horizontal plate (25) holding said pivoting support (27), this plate being pivoting about a substantially vertical axle and its position being able to be indexed.

6. Finishing machine according to claim 5, **characterized in that** said plate (25) holds several pivoting supports (27) for the receipt of the parts to be treated.

7. Finishing machine according to claim 6, **characterized in that** said plate (25) holds two pivoting supports (27) located 180° apart from each other, one of the supports being in a treatment position near the finishing means (18), while the other is in a loading and unloading position, and said plate being arranged to move the two supports from one position to the other by rotating 180°.

8. Finishing machine according to claim 1, **characterized in that** it comprises a control unit (14) for regulating the displacements of the finishing unit (12) and/or the receiving unit (13) of parts to be treated.

9. A finishing machine according to claim 8, **characterized in that** the control unit (14) comprises an operator interface (29) arranged to allow the programming of the displacements of the finishing unit (12) and/or the receiving unit (13) of parts to be treated.

10. Finishing machine according to claim 8, **characterized in that** the control unit (14) comprises a programming unit (30) arranged to store the displacements of the finishing unit (12) and/or the receiving unit (13) of parts to be treated.

11. Finishing machine according to claim 1, **characterized in that** it comprises suction means (31) consisting of a suction device and a suction tube (32), one end of which opens into the bottom of the frame (11).
